# EUROPEAN PATENT APPLICATION

(11) **EP 1 772 224 A2**
(43) Date of publication of application: **11.04.2007**
(21) Application number: 06121508.3
(22) Date of filing: 29.09.2006
(51) Int. Cl.: B23K 20/12

(54) **Method for manufacturing heat exchangers and heat exchangers thus obtained**

(30) Priority: 06.10.2005 IT MO20050253
(71) Applicant: A.M. S.R.L., 40139 Bologna (IT)
(72) Inventor: Vanini, Giuseppe, 40139, Bologna (IT)
(74) Representative: Fuochi, Riccardo

(57) **Abstract**

A method for manufacturing heat exchangers comprising heat-exchanging means provided with an end and supporting means provided with a surface to be welded and seat means, comprises inserting said end of said heat-exchanging means into said seat means, after said inserting there is provided welding through friction stir welding said end at said seat means by means of a welding tool.

## Description

The invention relates to a method for manufacturing heat exchangers and heat exchangers made through the aforesaid method.

In particular, the invention relates to heat exchangers that are associable with boilers for domestic use, for example boilers with heat regenerators or condensing boilers.

The condensing boilers enable the sensible and latent heat contained in the fumes produced by combustion to be exploited, heat which in traditional boilers is lost through the flue without being used.

The heat contained in the fumes is recovered through heat exchangers, in which the high-temperature fumes are made to flow through a plurality of low-temperature conduits, which are passed through by return water that is then heated in the boiler.

In this way, the steam contained in the fumes, in contact with the conduits, condenses, transferring the latent heat contained therein to the return water, preheating the latter.

Heat exchangers for boilers with heat regenerators are known comprising a plurality of metal conduits, arranged for being passed through by a water flow.

The conduits are positioned parallel near to one another and are provided with appropriately shaped opposing ends arranged for being inserted into the respective slots obtained in supporting plates.

The supporting plates, located at the ends of the conduits, have the function of supporting the conduits, stiffening the structure of the heat exchanger and connecting the exchanger to respective fume and water pipes.

Methods are known for making the aforesaid exchangers, in which the ends of the conduits are fastened to the slots of the respective plates by means of TIG ("Tungsten Inert Gas") welding or by means of brazing.

TIG welding is a fusion welding process that exploits the high temperature produced by an electric arc that is formed between a tungsten electrode that does not melt and the edges of the workpieces to be welded.

TIG welding is performed by melting the previously positioned edges of the workpieces to be welded and if necessary adding meltable support material in the shape of rods.

Further, during welding the electric arc is protected by an inert gas, normally argon, which is used to protect the weld pool from atmospheric contamination.

A drawback of this method is the excessive width of the welding bead that is made at the ends of the conduits and of the respective slots.

It is therefore necessary to distance each conduit from those adjacent to prevent the welding beam that is made between a conduit and the respective slot overlapping adjacent conduits.

By equal dimensions of the heat exchanger, in this manner, the number of conduits that is associable with the exchanger itself is limited.

It is thus clear that by decreasing the number of conduits the heat exchange surface that is achievable in the heat exchanger is decreased accordingly.

If on the other hand the method comprising brazing is used to connect the conduits and the plates, it is necessary for the plates to be covered with a layer of appropriate brazing alloy.

After the ends of the conduits have been inserted into the respective slots, the exchanger that is thus assembled is positioned inside a kiln that melts the brazing alloy.

As the brazing alloy melts it penetrates through capillarity into the interstices between the conduits and the respective slots, achieving the desired weld.

A drawback of this method is that the temperatures required for achieving brazing cause the annealing of the metal with which the exchanger is made.

This causes deformations in the structure of the exchanger, with consequent deterioration of the mechanical features, such as for example resistance, and difficulty in maintaining the required dimensional tolerances.

It is thus necessary to resort to subsequent machining in order to restore the dimensional tolerances required for associating the exchanger with the boiler.

A further drawback of the method for obtaining a heat exchanger by means of brazing is that this method requires very precise dimensional tolerances, with consequent increase of processing costs.

In fact, if the machining that is necessary for manufacturing the conduits and the slots do not meet the required dimensional tolerances the interstices between the conduits and the respective slots may be too large and the melted brazing alloy may not be able to penetrate by capillarity, not performing welding between the conduit and the slot.

It is clear how this can seriously compromise the fume or water seal, so that the exchanger has to be rejected.

An object of the invention is to improve the heat exchangers associated with boilers with heat regenerators and the methods for manufacturing the heat exchangers.

A further object is to provide a method for manufacturing heat exchangers that enables the heat exchange surface to be increased for the same total exchanger dimensions.

Still a further object is to provide a method for manufacturing heat exchangers that enables, for the same total plate size, the number of conduits associable therewith to be increased, consequently increasing the possibility of heat exchange achievable by the heat exchanger.

Still another object is to obtain a method that enables heat exchangers to be obtained that after assembly maintain good mechanical properties and desired dimensional tolerances.

Another object is to obtain a method for assembling a heat exchanger that does not require very precise dimensional tolerances and does not prejudice the seal of the exchanger.

In a first aspect of the invention there is provided a method for manufacturing heat exchangers comprising heat-exchanging means provided with an end and supporting means provided with a surface to be welded and seat means, said method comprises inserting said end of said heat-exchanging means in said seat means characterised in that after said inserting there is provided friction stir welding of said end to said seat means through a welding tool.

Owing to this aspect of the invention, it is possible to obtain heat exchangers that enable the number of heat-exchanging means that are associable with the supporting means to be increased, improving the heat exchange that is achievable in the exchanger.

In fact, owing to friction stir welding, weld beads are obtained that have reduced width. This enables a greater number of seat means to be obtained for the same surface of the supporting means.

Consequently, it is possible to insert a greater number of heat-exchanging means that enable a heat-exchange surface to be increased.

Owing to this aspect of the invention it is further possible to obtain a heat exchanger with good mechanical properties and which maintains desired dimensional tolerances after assembly, inasmuch as the modest thermal contribution that is necessary for friction stir welding does not cause alterations to the structure and dimensions of the heat exchanger.

In a second aspect of the invention a heat exchanger is provided having a substantially longitudinal first axis, a substantially transverse second axis and a substantially vertical third axis, and comprising heat-exchanging means arranged for conveying a fluid, supporting means mounted in end regions of said heat-exchanging means, said heat-exchanging means extends along said first axis, said heat-exchanging means has total dimensions measured along said second axis, each of said heat-exchanging means has a width measured along said second axis, the width defines with the total dimensions a first ratio comprised between 1/20 and 1/35, characterised in that said heat-exchanging means is fixed to said supporting means by means of friction stir welding.

In a third aspect of the invention there is provided tool means extending along an axis and associable with a welding device arranged for friction stir welding, said tool means has an external diameter and comprises a portion arranged for coming into contact with surfaces to be welded and tip means projecting from said portion, characterised in that said portion is provided with a substantially concave surface.

The invention can be better understood and carried into effect with reference to the attached drawings in which some embodiments of the invention are shown by way of nonlimiting example, in which:
Figure 1 is a side view of a heat exchanger associable with a boiler with heat regenerator;
Figure 2 is a front view of the exchanger in Figure 1;
Figure 3 is a plan view of the exchanger in Figure 1;
Figure 4 is a front view of a first supporting plate;
Figure 5 is a front view of a second supporting plate;
Figure 6 is a front view of a panel;
Figure 7 is a side view of the panel in Figure 6;
Figure 8 is a front view of a welding tool;
Figure 9 is a section taken along plane IX-IX of the welding tool in Figure 8;
Figure 9a is an enlarged detail of Figure 9;
Figure 10 is a plan view of the welding tool in Figure 8;
Figure 11 is a section taken along plane XI-XI of the welding tool in Figure 8;
Figure 12 is a front view of an alternative embodiment of the heat exchanger in Figure 1;
Figure 13 is a section taken along plane XIII-XIII of the heat exchanger in Figure 12;
Figure 14 is a section taken along plane XIV-XIV of the heat exchanger in Figure 13;
Figure 15 is a fragmentary front view of the welding tool in Figure 8 in an operating step.

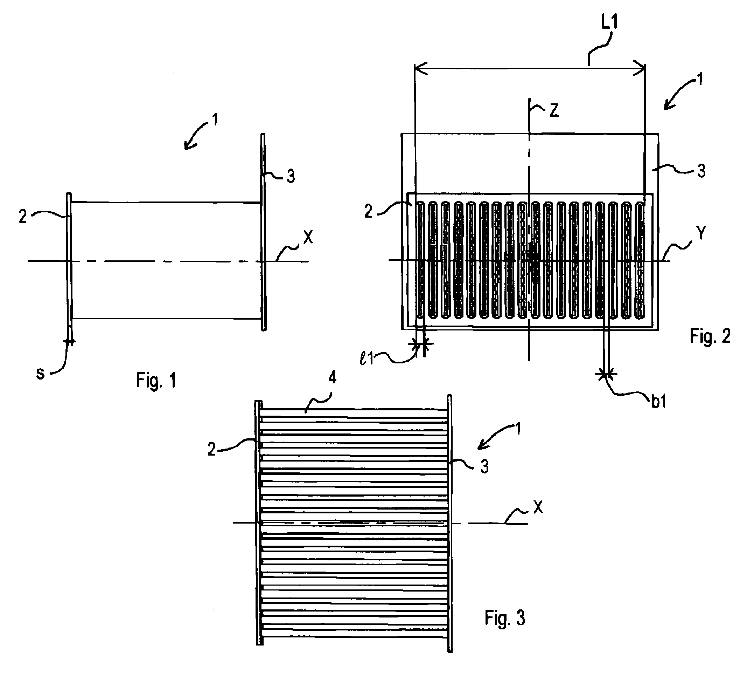

With reference to Figures 1 to 3, there is shown a heat exchanger 1, extending along a first longitudinal axis X, arranged for being positioned inside a boiler with heat regenerator, which is not shown.

The heat exchanger 1 is preferably made from a light alloy, aluminium, or aluminium alloys, inasmuch as this metal possesses features such as lightness, resistance to corrosion, excellent heat conductivity, mechanical resistance and total recyclability that make it particularly suitable for use in heat exchangers.

The heat exchanger 1 comprises a first supporting plate 2 and a second supporting plate 3 that are substantially planar, being substantially rectangle-shaped, extending along a substantially transverse second axis Y.

The first supporting plate 2 and the second supporting plate 3 are positioned along the first axis X, in such a way that the second supporting plate 3 is opposite the first supporting plate 2.

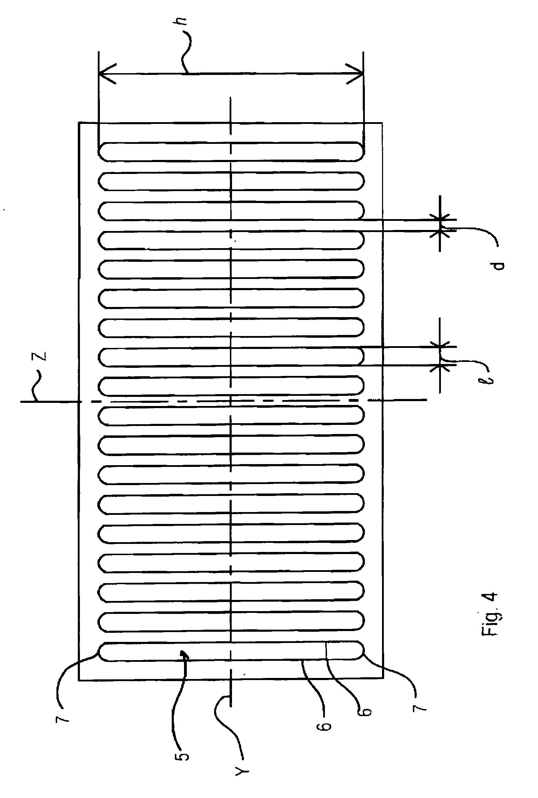

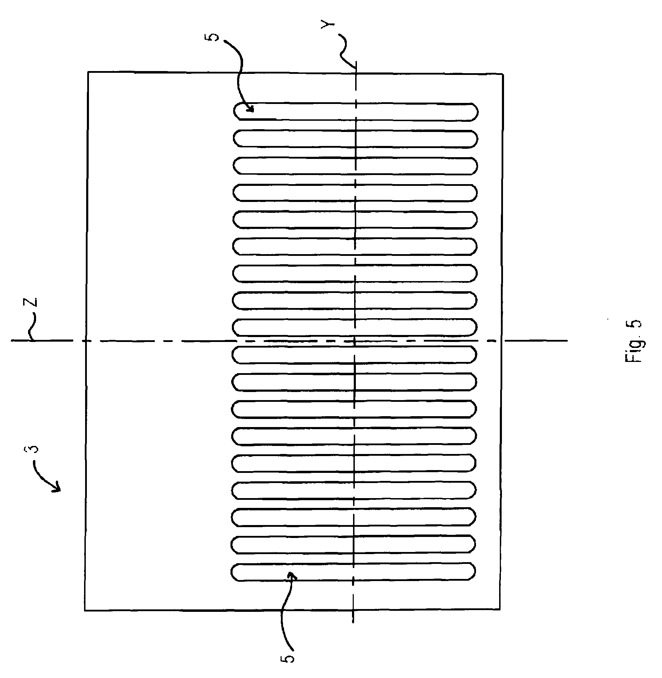

The first supporting plate 2 and the second supporting plate 3, can be obtained from a suitably sheared aluminium sheet, in which suitably shaped slots 5 are obtained (Figures 4 and 5) .

The slots 5 extend along a direction substantially parallel to a third substantially vertical axis Z, and are positioned next to one another.

In particular, the slots 5 have a width equal to 1, a height equal to h and a thickness equal to s and are located at a distance d from one another.

In an example 1 measures approximately 6 mm, h measures approximately 90 mm, s measures approximately 3 mm and d measures approximately 4 mm.

Further, each slot 5 comprises a pair of rectilinear edges 6, that are opposite one another, joined by curvilinear edges 7.

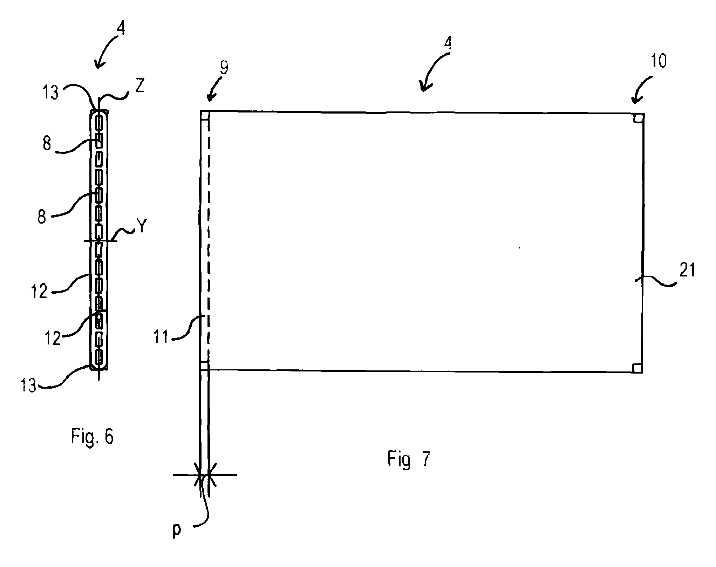

The first plate 2 and the second plate 3 cooperate to support a plurality of panels 4, shown in detail in Figure 6 and in Figure 7.

The panels 4 extend along the first axis X and can be made from extruded aluminium.

Each panel 4 is substantially parallelpipedon-shaped and is provided with a plurality of conduits 8 arranged for being traversed, during operation, for example by water.

The conduits 8 have a substantially rectangular section and extend parallel next to one another along a direction substantially parallel to the first axis X.

In an alternative embodiment, which is not shown, the conduits 8 may have any section.

The panels 4 each comprise a first end region 9 and a second end region 10 opposite the first end region 9.

From the first end region 9 and from the second end region 10 a first end portion 11 and a second end portion 21, project externally, having a depth p that is substantially equal to the thickness s of the slots 5.

Each end portion comprises further rectilinear edges 12 that are substantially parallel to one another and extend along the third axis Z, joined by further curvilinear edges 13.

The curvilinear edges 13 are obtained through cold plastic deformation with an appropriate forming tool.

In particular, each first end portion 11 and each second end portion 21 is shaped in such a way as to be able to be inserted during assembly respectively in a slot 5 obtained in the first supporting plate 2 and in a slot 5 obtained in the second supporting plate 3.

Each panel 4 is positioned at a first distance b1 with respect to the panels 4 adjacent thereto measured along the second axis Y.

The plurality of panels 4 has a first total dimension L1 whilst each panel 4 has a first width 11, both measured along the second axis Y.

The ratio between the first width 11 and the first dimension L1 is comprised in the range comprised between 1/25 and 1/35, whilst the ratio between the first distance b1 and the first dimension L1 is in the range comprised between 1/35 and 1/55.

In an example the ratio between the first width 11 and the first dimension L1 is substantially equal to 1/30, whilst the ratio between the first distance b1 and the first dimension L1 is substantially equal to 1/45.

In particular, the first distance b1 is particularly reduced with respect to the extent of the first dimension L1 owing to the friction stir welding process.

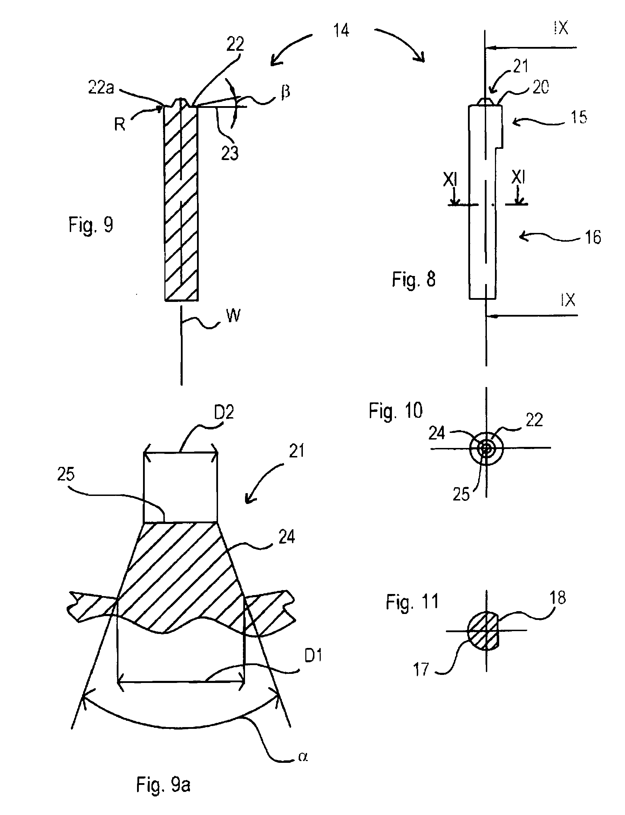

With reference to Figures 8 to 11, there is shown a tool 14 extending along an axis W.

The tool 14 is associable with a welding device arranged for achieving so-called friction stir welding between each of the first end portions 11 and each of the second end portions 21 with the respective slots 5 of the first supporting plate 2 and of the second supporting plate 3, as will be disclosed in detail below.

The tool 14 comprises a first substantially cylindrical portion 15 joined through a step 19 to a second portion 16 (Figure 11) bound laterally by a curved surface 17 and by a flat surface 18.

The second portion 16 acts as a shank and is shaped in such a way as to adapt to a gripping cavity of a spindle with which the welding device is provided.

The first portion 16 is provided with a surface 20 from which a substantially conically shaped tip 21 projects substantially centrally with an angle at the vertex α (Figure 9a) comprised between 50° and 80°.

The tip 21 is defined by a side surface 24 and by an upper surface 25 substantially perpendicular to the axis W.

In an example the angle at the vertex α has a value equal to approximately 70°.

The tip 21 comprises a first diameter D1 at the surface 20 and a second diameter D2 defined by the upper surface 25.

In an example the first diameter D1 has a value comprised between 3 mm and 5 mm and the second diameter D2 has a value comprised between 1 mm and 3 mm.

In a further example the first diameter D1 is substantially equal to 4 mm whilst the second diameter D2 is substantially equal to 2 mm.

The portion of the surface 20 not occupied by the tip 21 bounds a substantially concave annular surface 22.

The annular surface 22 comprises in a peripheral region thereof a shoulder 22a connecting with the first portion 15 with a radius R.

In an example the radius R is substantially equal to 0.5 mm.

The side surface 24, the upper surface 25, the annular surface 22 and the shoulder 22a have surface roughness suitable for obtaining the plasticisation of the material during the welding process through friction stir welding.

In an example, the roughness of the aforesaid surfaces 24, 25, 22, 22a has a value Ra, as defined by standard UNI 3963, substantially equal to 1.6 µm.

The annular surface 22 defines with a reference plane 23 substantially perpendicular to the axis W a second angle β comprised between approximately 5° and approximately 20°.

In an example, the angle β measures approximately 12°.

The method for assembling the heat exchanger 1 initially provides for inserting the respective first end portions 11 and the second end portions 21 of each panel 4 into the respective slots 5 obtained in the first supporting plate 2 and in the second supporting plate 3.

Subsequently, the welding device is operated, which through the spindle rotates the tool 14 that welds through friction stir welding the first end portions 11 with the respective slots 5 of the first plate 2.

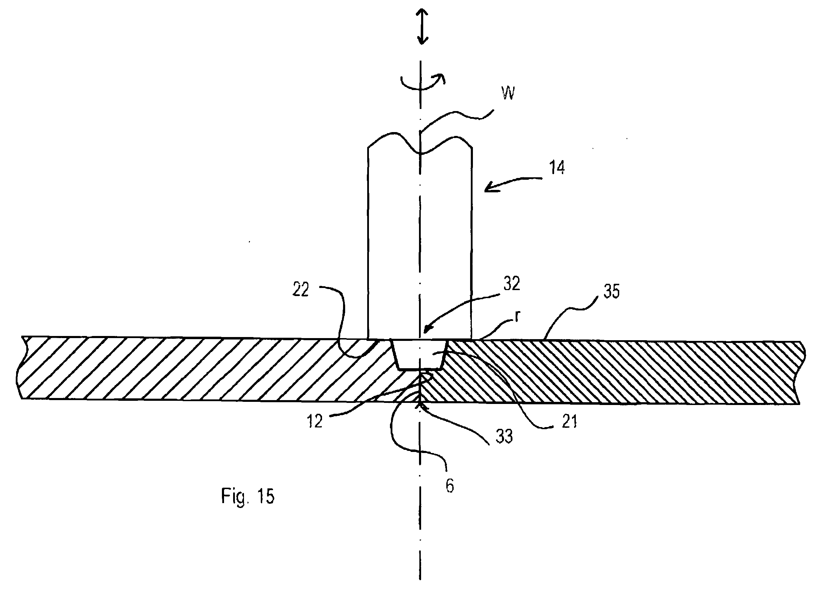

The tool 14, by rotating around the rotation axis W thereof, which is substantially perpendicular with respect to a welding surface 35 (Figure 15) at an angular speed, is moved very slowly, at an approach speed comprised between approximately 0.25 and 0.4 mm/s, preferably 0.32 mm/s, to a welding perimeter 32 positioned substantially at a gap 33 bound on the one side by the rectilinear edges 6 and by the curvilinear edges 7 and on the other by the further rectilinear edges 12 and by the further curvilinear edges 13.

In an embodiment of the invention, the angular speed has a value comprised between 1500 and 4500 rpm and in an example has a value of 3000 rpm.

The angular speed corresponds for a tool with an external diameter D3 of approximately 7.5 mm to a peripheral speed comprised between 500 and 1800 mm/s.

In an embodiment of the invention the peripheral speed has a value substantially equal to 1200 mm/s.

When the tip 21 is placed in contact with the welding surface 35 it melts the metal through friction and penetrates the gap 33 until the shoulder 22a is at a depth r with respect to the welding surface 35.

In an embodiment of the invention, the depth r has a value comprised between 0.05 and 0.15 mm and preferably equal to approximately 0.1 mm.

In particular, the shoulder 22a, with the previously defined peripheral speed values, owing to the friction generated with the contact with the welding surface 35, provides the heat necessary for melting the metal of the welding perimeter 32, whilst the shoulder 22a cooperates, owing to the particular conformation thereof, with the tip 21 to promote stirring of the melted metal.

Subsequently, the tool 14 is moved along the welding perimeter 32, at an advancing speed comprised between approximately 550 and 650 mm/min until the tool 14 has covered the entire welding perimeter 32, so as to complete the desired welding.

In an example, the advancing speed has a value equal to approximately 600 mm/min.

This method is applied in a substantially similar way to all the panels 4, even when the latter have to be welded to the second supporting plate 3.

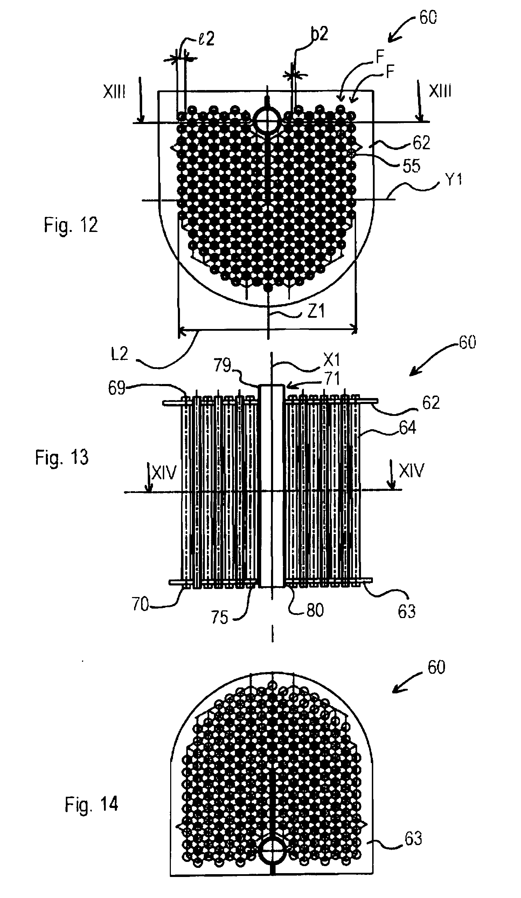

In an alternative embodiment, shown in Figures 12 to 14, there is provided a further heat exchanger 60 arranged for being mounted in a boiler with heat regenerator, which is not shown.

The further heat exchanger 60 comprises a further first supporting plate 62 and a further second supporting plate 63 that are substantially planar.

The further first supporting plate 62 and the further second supporting plate 63 are positioned along a further first axis X1, in such a way that the further second supporting plate 63 is in use opposite and substantially parallel to the further first supporting plate 62.

The further first supporting plate 62 and the further second supporting plate 63 further extend transversely along a further second axis Y1 and vertically along a further third axis Z1.

The further first supporting plate 62 and the further second supporting plate 63 can be obtained from an appropriately sheared aluminium sheet, in which are obtained a plurality of openings 55 having a substantially circular section.

The openings 55 are positioned next to one another in such a way as to define a plurality of parallel rows F that are mutually staggered and extend substantially parallel to the further third axis Z1.

The further first supporting plate 62 and the further second supporting plate 63 cooperate to support a plurality of pipes 64, extending along the further first axis X1 and which are made preferably of aluminium.

In particular, the pipes 64 are arranged for being traversed by delivery water delivered from the boiler.

Each pipe 64 is positioned at a second distance b2, measured along the further second axis Y1, with respect to the pipes 64 adjacent thereto.

The plurality of pipes 64 has a second total dimension L2 whilst each pipe 64 has a second width 12, both measured along the further second axis Y1.

The ratio between the second width 12 and the second dimension L2 is comprised in the range comprised between 1/20 and 1/35, whilst the ratio between the second distance b2 and the second dimension L2 is in the range comprised between 1/35 and 1/55.

In an example, the ratio between the second width 12 and the second dimension L2 is substantially equal to 3/65, whilst the ratio between the second distance b2 and the second dimension L2 is substantially equal to 3/130.

The pipes 64 each comprise a first end 69 and a second end 70 opposite the first end 69.

The first end 69 and the second end 70 are shaped in such a way as to be able to pass through the openings 55 respectively of the further first supporting plate 62 and of the further second supporting plate 63.

The further heat exchanger 60 is further provided with a return pipe 71, preferably in aluminium, arranged for conveying return water to the boiler.

The return pipe 71 has a greater diameter than the diameter of the pipes 64.

The return pipe 71 is provided with a further first end 79 and with a further second end 80 opposite the further first end 79.

The further first end 79 and the further second end 80 are shaped in such a way as to be able to be inserted into further openings 75 obtained respectively in the further first supporting plate 62 and in the further second supporting plate 63.

The return pipe 71 is further provided with an external surface 52 from which a pair of tabs 81 projects that are substantially planar, extending along the further first axis X1, and having the function of conveying the fumes inside the further exchanger 60.

Each tab 81 is provided with a first shaped peripheral region and with a second shaped peripheral region, which are not shown, which are arranged for engaging respectively with a first shaped seat and with a second shaped seat obtained respectively in the further first supporting plate 62 and in the further second supporting plate 63.

In order to assemble the further heat exchanger 60, it is first of all necessary to insert the first end 69 and the second end 70 of the pipes 64 into the openings 55 respectively of the further first supporting plate 62 and of the further second supporting plate 63.

Simultaneously, the further first end 79 and the further second end 80 of the return pipe 71 are inserted respectively into the further openings 75 of the further first supporting plate 62 and of the further second supporting plate 63.

Simultaneously the first shaped peripheral region and the second shaped peripheral region of the tabs 81 are inserted respectively into the first and into the second shaped seat.

It is now possible to weld the pipes 64 and the return pipe 71 to the further first supporting plate 62 and to the further second supporting plate 63 through friction stir welding.

In particular, for welding the pipes 64 to the respective openings 55 a further welding device is used that is substantially similar to the welding device disclosed above.

In particular, the further welding device is provided with a first tool, which is not shown, which is provided with a first tip shaped in such a way as to be able to be inserted inside the first end 69 and/or the second end 70.

Similarly to the preceding case, the first tool is rotated and is moved close to the first end 69 and/or the second end 70 at an appropriate speed.

The friction generated between the first tip and the first end 69 and/or the second end 70 melts the metal locally.

The first tool is moved close to the aforesaid ends until a first shoulder with which the first tool is provided is placed in contact with a further welding surface.

In particular, the first tip is shaped in such a way as to achieve friction stir welding along a perimeter of the ends 69 and/or 70 without moving along the perimeter.

The further welding device is furthermore provided with a second tool, which is not shown, arranged for friction stir welding of the return pipe 71 to the further first supporting plate 62 and to the second supporting plate 63.

We shall not dwell on the description of this process inasmuch as it is substantially similar to the method disclosed for welding the heat exchanger 1.

## Claims

1. Method for manufacturing heat exchangers (1) comprising heat-exchanging means (4, 64, 71) provided with an end (11, 21; 69, 70, 79, 80) and supporting means (2, 3; 62, 63) provided with a surface to be welded (35) and seat means (5; 55, 75), said method comprises inserting said end (11, 21; 69, 70, 79, 80) of said heat-exchanging means (4, 64, 71) into said seat means (5; 55, 75), **characterised in that** after said inserting there is provided welding through friction stir welding said end (11, 21; 69, 70, 79, 80) to said seat means (5; 55, 75) through a welding tool (14).

2. Method according to claim 1, wherein said welding comprises rotating said welding tool (14) around an axis (W).

3. Method according to claim 1, or 2, wherein said welding comprises moving said welding tool (14) close to said surface to be welded (35).

4. Method according to any preceding claim, wherein said welding comprises introducing at least partially said tool (14) into said surface to be welded (35).

5. Method according to any preceding claim, wherein said welding comprises in sequence said rotating, said moving said welding tool (14) close and said introducing.

6. Method according to any preceding claim, wherein said welding comprises advancing said welding tool along a welding perimeter (32) defined by said end (11, 21; 69, 70, 79, 80) and by said seat means (5; 55, 75).

7. Method according to any preceding claim, wherein said welding comprises moving away said welding tool (14) from said surface to be welded (35).

8. Method according to claim 6, or 7, wherein said welding comprises in sequence said advancing and said moving away.

9. Method according to any one of claims 2 to 8, wherein said rotating comprises a peripheral speed value of the welding tool comprised between 500 and 1800 mm/s.

10. Method according to claim 9, wherein said peripheral speed value is substantially equal to 1200 mm/s.

11. Method according to any one of claims 3 to 10, wherein said moving said welding tool (14) close comprises an approach speed value comprised between 0.25 and 0.4 mm/s.

12. Method according to claim 11, wherein said approach speed value is substantially equal to 0.32 mm/s.

13. Method according to any one of claims 6 to 12, wherein said advancing comprises an advancing speed value comprised between 550 and 650 mm/min.

14. Method according to claim 13, wherein said advancing speed value is substantially equal to 600 mm/min.

15. Heat exchanger (1) having a substantially longitudinal first axis (X; X1), a substantially transverse second axis (Y; Y1) and a substantially vertical third axis (Z; Z1), and comprising heat-exchanging means (4; 64, 71) arranged for conveying a fluid, supporting means (2, 3; 62, 63) mounted in end regions (11, 21; 69, 70, 79, 80) of said heat-exchanging means (4; 64, 71), said heat-exchanging means (4; 64, 71) extends along said first axis (X; X1), said heat-exchanging means (4; 64, 71) has total dimensions (L1, L2) measured along said second axis (Y; Y1), each of said heat-exchanging means (4; 64, 71) has a width (11, 12) measured along said second axis (Y; Y1), the width (11, 12) defines with the total dimensions (L1, L2) a first ratio comprised between 1/20 and 1/35, **characterised in that** said heat-exchanging means (4, 64, 71) is fixed to said supporting means (2, 3; 62, 63) through friction stir welding.

16. Exchanger according to claim 15, wherein said heat-exchanging means comprises a plurality of panels (4).

17. Exchanger according to claim 15, or 16, wherein said first ratio defined by said width (11) with said total dimensions (L1) is substantially equal to 1/30.

18. Exchanger according to claim 16, or 17, wherein said panels (4) are spaced apart from one another by a first distance (b1) measured along said second axis (Y), said first distance (b1) defines with the total dimensions (L1) a second ratio comprised between 1/35 and 1/55.

19. Exchanger according to claim 18, wherein said second ratio defined by said first distance (b1) with said total dimensions (L1) is substantially equal to 1/45.

20. Exchanger according to claim 15, wherein said exchanging means comprises pipe means (64).

21. Exchanger according to claim 15, or 20, wherein said first ratio defined by said width (12) with said total dimensions (L2) is substantially equal to 3/65.

22. Exchanger according to claim 20, or 21, wherein said pipe means (64) are spaced apart from one another by a second distance (b2) measured along said second axis (Y1), said second distance (b2) defines with the total dimensions (L2) a further second ratio comprised between 1/35 and 1/55.

23. Exchanger according to claim 22, wherein said further second ratio defined by said second distance (b2) with said total dimensions (L2) is substantially equal to 3/130.

24. Tool means extending along an axis (W) associable with a welding device arranged for friction stir welding, said tool means has an external diameter (D3) and comprises a portion (22a) arranged for coming into contact with surfaces to be welded (35) and tip means (21) projecting from said portion (22a), **characterised in that** said portion (22a) is provided with a substantially concave surface (22).

25. Tool means according to claim 24, wherein said external diameter (D3) is comprised between 5 and 10 mm.

26. Tool means according to claim 25, wherein said external diameter (D3) is substantially equal to 7.5 mm.

27. Tool means according to any one of claims 24 to 26, wherein said substantially concave surface (22) defines with a through plane (23) which is substantially perpendicular to said axis (W) an angle (β) comprised between 5° and 20°.

28. Tool means according to claim 27, wherein said angle (β) is substantially equal to 12°.

29. Tool means according to any one of claims 24 to 28, wherein said tip means (21) has a substantially conical shape with an angle at the vertex (α) comprised between 50° and 80°.

30. Tool means according to claim 29, wherein said angle at the vertex (α) is substantially equal to 70°.

31. Tool means according to any one of claims 24 to 30, wherein said tip means (21) is bounded by a lower surface (20) having a first diameter (D1), by an upper surface (25) having a second diameter (D2) and by a side surface (24).

32. Tool means according to claim 31, wherein said first diameter (D1) has a value comprised between 3 mm and 5 mm.

33. Tool means according to claim 31, or 32, wherein said first diameter (D1) is substantially equal to 4 mm.

34. Tool means according to any one of claims 31 to 33, wherein said second diameter (D2) has a value comprised between 1 mm and 3 mm.

35. Tool means according to any one of claims 31 to 34, wherein said second diameter (D2) is substantially equal to 2 mm.

36. Tool means according to any one of claims 31 to 35; wherein said side surface (24), said upper surface (25), said concave surface (22) and said portion (22a) have a roughness value Ra substantially equal to 1.6 µm.

37. Tool means according to any one of claims 24 to 36, comprising a first portion (15) extending around said axis (W), connecting with said portion (22a) with a radius (R).

38. Tool means according to claim 37, wherein said radius (R) is substantially equal to 0.5 mm.
